# EUROPEAN PATENT APPLICATION

(11) **EP 1 782 688 A1**
(43) Date of publication of application: **09.05.2007**
(21) Application number: 05110483.4
(22) Date of filing: 08.11.2005
(51) Int. Cl.: A01L 7/04

(54) **Shoe system for hoofed animals, stud for such a shoe system and a method for studding a shoe**

(71) Applicant: Huge Bright International Limited, Hong Kong (CN)
(72) Inventor: Melin, Per, 605 91, NORRKÖPING (SE); Huggert, Mia, 605 91, NORRKÖPING (SE)
(74) Representative: Bokinge, Ole

(57) **Abstract**

A shoe system for a hoofed animal comprises a shoe (1) having a wear side, which in use faces a surface supporting the animal, and a detachable stud. The system comprises fixing means for fixing the stud to the shoe (1). The fixing means comprising a recess (5) in the wear side and a fixing protrusion on the stud, which is sized and adapted for being received in the recess (5). The fixing means further comprises a pin hole (6a, 6b) in the shoe (1) which is open into said recess (5), and a corresponding pin hole in the fixing protrusion, whereby the stud is lockable relative to the shoe (1) by a locking pin insertable into said pin holes (6a, 6b).

## Description

### Field of the Invention

The invention relates to a shoe system for a hoofed animal, such as a horse, according to the precharacterizing portion of claim 1, a stud for a such a shoe system and a method for studding a shoe.

### Background

Studded shoes for hoofed animals, such as horses are known and used to provide improved grip on potentially slippery surfaces. There are different types of studs, calks or frostnails for use on e.g. sand, dirt, grass, ice etc. However, when the animal is to walk on a smooth surface, such as stone or asphalt, it may be desirable to have no studs at all on the shoes.

Hence, it is understood that as an animal is transferred between different environments, such as a race track, an icy road, a grass meadow, a trailer and a stable, it may be desirable to shift or remove the studs from its shoes.

It is also understood that the studs of a shoe may be subjected to immense forces as the animal walks, jumps, trots, gallops or turns.

US 4,139,061 discloses a system for providing interchangeable studs to aluminum horse shoes. The studs are provided with a fixing protrusion, with an elastic o-ring, and inserted into a recess in the wear side of the horse shoe, whereby the compressed o-ring provides a frictional locking of the stud relative to the shoe. However, the locking force between the stud and the shoe in such a system is limited by the achievable friction.

DE 10 2004 026 191 A1 discloses a system for providing interchangeable studs to horse shoes. The studs are provided with a fixing protrusion having a circumferential groove. The fixing protrusion protrudes into a recess on the upper side of the shoe, where a spring clip is arranged to engage the groove so as to lock stud relative to the shoe, while allowing the stud to rotate relative to the shoe. However, the locking force between the stud and the shoe is limited by the relatively small area by which the spring clip interacts with the groove of the fixing protrusion.

DE 20 2005 005 955 U1 discloses a system for providing interchangeable studs to horse shoes. The studs are provided with a fixing protrusion having a circumferential groove. The fixing protrusion protrudes into a recess on the upper side of the shoe, and a threaded hole is open into the recess and to a side surface of the shoe. A pointed screw is inserted into the threaded hole, with its tip protruding into the recess and interacting with the circumferential groove of the fixing protrusion. However, the locking force between the stud and the shoe is limited by the relatively small area of engagement between the tip of the screw and the groove of the fixing protrusion. Furthermore, the system requires use of a screw driver, an Allen wrench etc. for detaching and attaching the studs, thereby rendering the shifting of studs a time consuming operation, and sometimes risky operation. Also, applying a torque to the shoe may cause injuries to e.g. the animal's joints.

Hence, there is a need for an improved system for providing interchangeable studs to horse shoes.

### Summary of the Invention

It is an object of the invention to wholly or partially overcome, or at least alleviate, the drawbacks of the prior art. One particular object is to provide a horse shoe with interchangeable studs, which enables rapid shifting of the studs, which is easy to manufacture, reliable, and which provides strong fixing of the stud relative to the shoe.

The object is wholly or partially achieved by a system, a stud and a method according to the respective independent claim.

Hence, there is provided a shoe system for a hoofed animal, the system comprising a shoe having a wear side which in use faces a surface supporting the animal, and a detachable stud. The shoe has fixing means for fixing the stud to the shoe, said fixing means comprising a recess in the wear side of the shoe and a fixing protrusion on the stud, which is sized and adapted for being received in the recess. The fixing means further comprises a pin hole in the shoe which is open into said recess, and a corresponding pin hole in the fixing protrusion, whereby the stud is lockable relative to the shoe by a locking pin insertable into said pin holes.

By using a combination of pin holes and a locking pin, rapid fixing and removal of the stud is achieved, since the pin can be easily pushed in and pulled out of the pin holes. The system is easy to manufacture since the tolerances are not critical, and it is reliable since there are few parts that can become damaged. In particular, the need for threads, which are particularly susceptible to damage, is eliminated. Finally, a strong fixing can be achieved, since a large contact surface between the pin holes and the locking pin can be achieved.

In one embodiment, the recess and the fixing protrusion are shaped to counteract rotation of the stud relative to the shoe.

Hence, loads on the locking pin resulting from torques being applied to the stud can be reduced or eliminated, thereby improving the fixing of the stud in the shoe. Also, this can be used to provide only one or a few positions in which the stud can be fitted into the recess, which facilitates alignment of the pin holes.

According to different embodiments, the shoe presents a front portion and two rearward extending branch portions, whereby said fixing means is provided at a respective rear part of the branch portions, and/or at transversely spaced apart portions of the front portion.

The pin hole may be open towards a side of the shoe, e.g. an outwardly facing side, an inwardly facing side, a rearward facing side or a forwardly facing side.

The pin hole may open into a side recess adapted for receiving a gripping portion of the locking pin. Thus, the gripping portion, typically a loop, a flattened or rounded head, etc., can be countersunk into the side of the shoe, which reduces the risk for damage to the locking pin from external forces, and which reduces the risk for injuring the animal by protruding parts of the locking pin.

The pin hole may open into the recess and continue on an opposite side of the recess. In combination with a fixing protrusion having a through hole, this provides very strong fixing of the stud relative to the shoe.

According to a second aspect, there is provided a stud for use in the shoe system as described above. The stud comprises a stud body and a fixing protrusion, which is sized and adapted for being received in a recess in the wear side of the shoe. The fixing protrusion comprises a pin hole, adapted for receiving a locking pin for locking the stud relative to the shoe.

The fixing protrusion may be shaped to counteract rotation of the stud relative to the shoe. The pin hole may be a through hole.

According to a third aspect, there is provided a method for studding a shoe for a hoofed animal, the method comprising providing a shoe having an wear side, which in use faces a surface supporting the animal, the shoe having fixing means comprising a recess in the wear side, which is sized and adapted for receiving the fixing protrusion of a stud, said fixing means comprising a pin hole in the shoe which is open into said recess, providing the stud as described above, arranging the fixing protrusion of the stud in the recess of the shoe, substantially aligning the pin holes of the shoe and the stud, respectively, and arranging a locking pin in said substantially aligned pin holes.

Embodiments of the shoe system will now be described in more detail with reference to the annexed drawings.

### Brief Description of the Drawings

Figs 1a-1c schematically illustrate a shoe for a hoofed animal.

Figs 2a-2c schematically illustrate a stud for use with the shoe of Figs 1a-1c.

Figs 3a-3c schematically illustrate a dummy stud for use with the shoe of Figs 1a-1c.

Figs 4a-4b schematically illustrate a tool for inserting or removing a locking pin in the shoe system of Figs 1a-1c and Figs 2a-2c, 3a-3c.

Figs 5a-5b schematically illustrate a locking pin for use in the shoe system of Figs 1a-1c and Figs 2a-2c, 3a-3c.

Figs 6a-6c schematically illustrate a shoe for a hoofed animal according to a second embodiment.

Figs 7a-7c schematically illustrate a stud according to a second embodiment.

Figs 8a-8b schematically illustrate a stud according to a third embodiment.

Figs 9a-9b schematically illustrate a stud according to a fourth embodiment.

Figs 10a-10b schematically illustrate a stud according to a fifth embodiment.

Figs 11a-11b schematically illustrate a stud according to a sixth embodiment.

Figs 12a-12b schematically illustrate a stud according to a seventh embodiment.

### Description of Embodiments

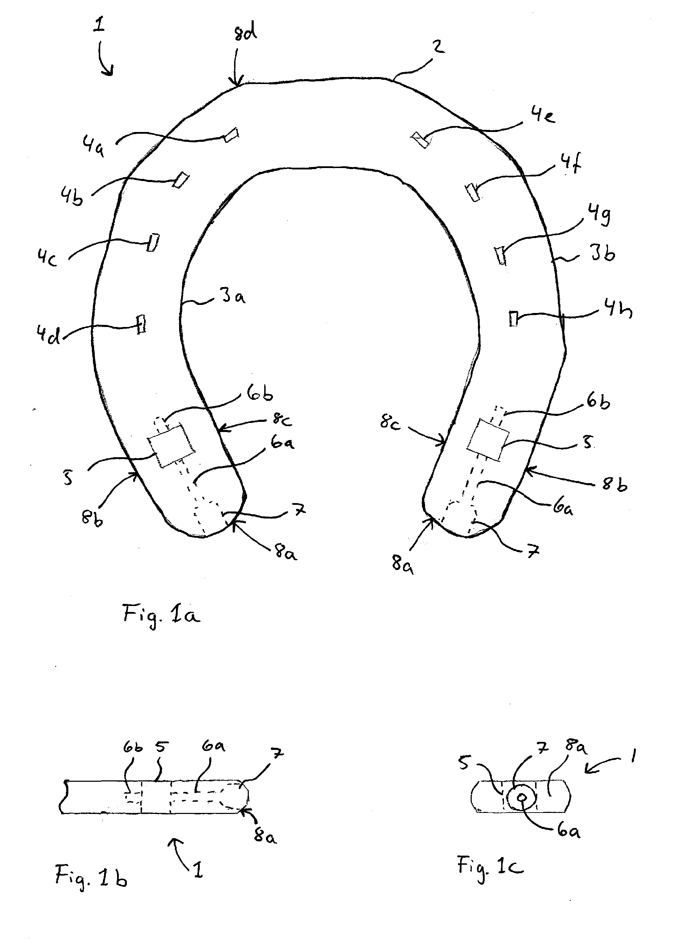

Referring to Fig. 1a, there is illustrated a shoe 1 for a hoofed animal (not shown), as seen from an wear side, i.e. the side facing the ground when the shoe is worn by the animal. Fig. 1b is a sectional view of rearmost portion of the branch portion 3a, 3b, taken along the pinhole 6a, 6b. Fig. 1c is a view of the rearmost portion of the branch portion 3a, 3b as seen from behind.

The shoe 1 has a front portion 2 and rearward extending branch portions 3a, 3b. The front portion 2, and/or the branch portions 3a, 3b may be provided with seam holes 4a-4h, through which nails (not shown) are driven for fixing the shoe to the hoof (not shown) of the animal. Alternatively, a nail-free fixing system, as is known in the art, may be used to fix the shoe to the hoof.

At the rear end of the branches 3a, 3b, recesses 5 are provided. The recesses 5 may be blind holes or through holes. A pin hole 6a, 6b is provided, which runs substantially parallel with the wear side of the shoe 1. A first portion 6a of the pin hole opens into the recess 5 and to a side surface 8a of the shoe 1. A second, optional, portion 6b of the pin hole opens into the recess, on the opposite side of the recess 5 to where the first portion 6a of the pin hole opens.

In the embodiment illustrated in Figs 1a-1c, the pin hole 6a opens to a rear side surface 8a of the shoe. However, the pin hole 6a may instead, or in addition, open to an outwardly or inwardly facing side surface 8b, 8c, respectively of the shoe 1. Similarly, in an embodiment (not shown), where the recess 5 is provided at the front portion 2 of the shoe 1, the pin hole 6a may instead open to a forwardly facing side surface 8d of the shoe 1.

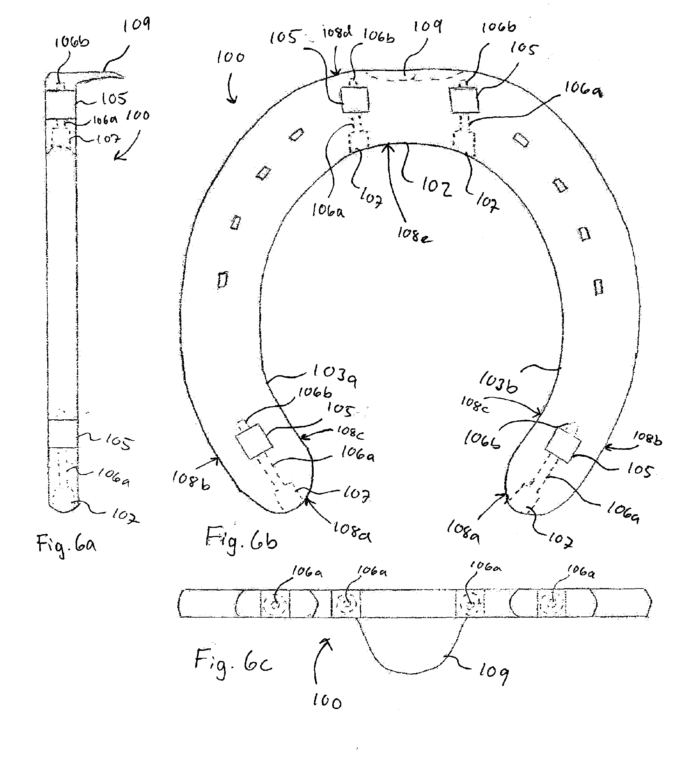

In the embodiment shown in Figs 1a-1c, the pin hole 6a opens into an optional side recess 7 in the side wall 8a, 8b, 8c, 8d. The side recess 7 may be sized and adapted for receiving the gripping part 41 of a locking pin 40 (Figs 5a-5b), preferably such that the entire gripping part 41 is countersunk into the side recess 7.

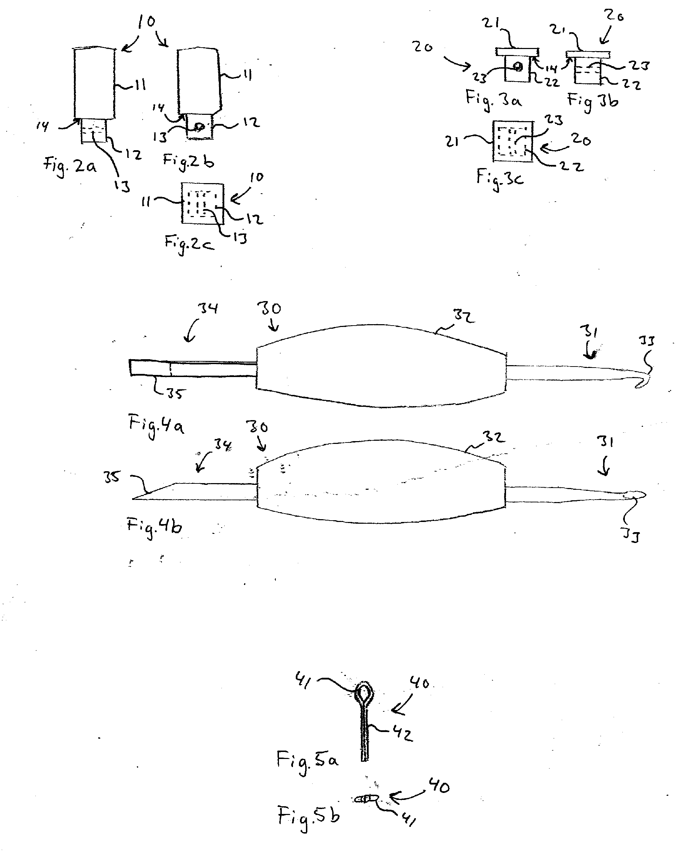

Fig. 2a is a side view of a stud 10 according to one embodiment. Fig. 2b is a side view of the stud 10 of Fig. 2a, as seen from another direction. Fig. 2c is a top view of the stud 10 of Fig. 2a.

The stud 10 comprises a stud body 11, which may have any desired shape, depending on its intended use. The stud 10 further comprises a fixing protrusion 12, which optionally may be slightly smaller than the stud body 11, such that an uppermost (in use) surface 14 of the stud body 11 may bear against the wear side of the shoe 1. The fixing protrusion 12 is sized and adapted for being received into the recess 5 of the shoe 1. The fixing protrusion 12 further comprises a pin hole 13, which, according to different embodiments, may be a blind hole or a through hole. The stud 10 may be manufactured from a material that is the same as, more durable than, or less durable than, that used in the shoe 1.

Fig. 3a is a side view of a blind stud 20 according to one embodiment. Fig. 3b is a side view of the blind stud 20 of Fig. 3a, as seen from another direction. Fig. 3c is a top view of the blind stud 20 of Fig. 3a.

The purpose of the blind stud 20 is to prevent dirt from entering into the recess 5 of the shoe when no stud is provided in the shoe.
The blind stud 20 comprises a blind stud body 21, which is typically a plate sized and adapted to cover the entire recess 5, and may be designed to protrude as little as possible from the wear side of the shoe 1. The blind stud 20 further comprises a fixing protrusion 22, which optionally may be slightly smaller than the blind stud body 21, such that an uppermost (in use) surface 24 of the blind stud body 21 may bear against the wear side of the shoe 1. The fixing protrusion 22 is sized and adapted for being received into the recess 5 of the shoe 1. The fixing protrusion 22 further comprises a pin hole 23, which may be a blind hole or a through hole. The blind stud 20 may be manufactured from a material that is more durable than that used in the shoe 1. Fig. 4a is a side view of a tool 30, which may be used for removing the locking pin 40 from the shoe 1, in order to enable shifting of studs 10, 20. The tool has a locking-pin engaging portion 31, a handle portion 32 and a spatula portion 34.

The locking pin engaging portion 31 may comprise a hook 33 that is adapted for gripping a loop provided on the gripping portion 41 of the locking pin 40.

The spatula portion 34 may comprise a flattened or tapering portion 35 that is adapted for being inserted between the stud 10, 20 and the shoe 1 to provide a wedge or lever, facilitating removal of the stud 10, 20 from the shoe 1.

Referring to Figs 5a-5b, the locking pin 40 may e.g. be a per se known split pin, which is sized and adapted for fitting with the pin holes 6a, 6b, 13, 23 of the shoe 1 and the stud 10, 20. The locking pin 40 may thus have a gripping portion 41, comprising e.g. a graspable loop, and a locking portion 42. Alternatively, the gripping portion 41 may comprise e.g. a flattened or rounded head (not shown), in which case a corresponding gripping tool (not shown) may be provided. In one embodiment, the pin and one or both of the pin holes 6a, 6b, 13, 23, 203, 213, 223, 233, 243, 253 may be threaded.

The recess 5 and the fixing protrusion 12 may be shaped to counteract rotation of the stud 10 relative to the shoe 1. Hence, the recess 5 may have a cross section in the plane of the wear side of the shoe, which is non-circular, e.g. square, rectangular, triangular, polygonal, elliptic, star-shaped etc. The fixing protrusion 12 may have the same shape, or any shape which fits with the shape of the recess so as to counteract rotation of the fixing protrusion 12 in the recess 5.

One or both pin holes 6a, 6b, 13, 23 may be threaded, thereby enabling use of a screw for fixing the stud 10, 20 to the shoe 1.

Figs 6a-6c illustrate a second embodiment of a shoe 100, wherein recesses 105 are provided both in the rearward branches 103a, 103b and in the front portion 102 of the shoe 100. Pin holes 106a, 106b are associated with each recess, and so are side recesses 107. An upwardly protruding part 109 is also indicated. The upwardly protruding part 109 may analogously be present in the first embodiment shown in Figs 1a-1c.

In the shoe 100 of Figs 6a-6c, the front and/or rear recesses 105 may be provided with studs 10. In the case where no studs 10 are provided in the front or rear recesses 105, blind studs 20 may be provided in the other, non-studded recesses.

The pin holes 106a, 106b and/or the side recesses 107 may be open towards side surfaces 108a, 108b, 108c, 108d, 108e of the shoe 100.

Figs 7a-7c schematically illustrate a stud 200 according to a second embodiment, wherein the stud body 201 is bulbous and wherein the fixing projection 202 and the pin hole 203 are the same as in Figs 2a-2c.

Figs 8a-8b schematically illustrate a stud 210 according to a third embodiment, wherein the stud body 211 is prismatic with a hexagonal base and a rounded apex 216and wherein the fixing projection 212 and the pin hole 213 are the same as in Figs 2a-2c.

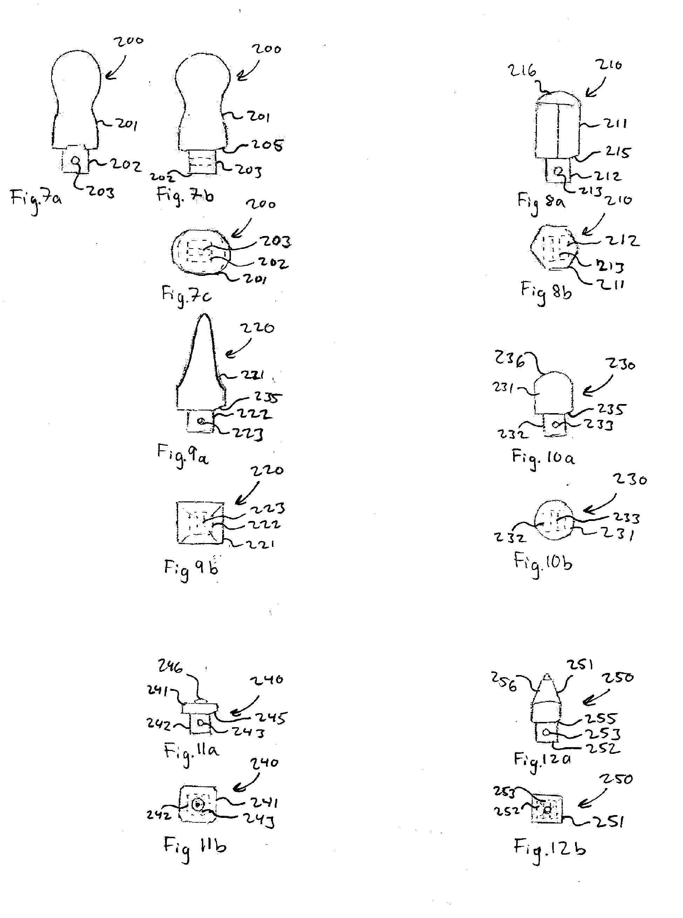

Figs 9a-9b schematically illustrate a stud 220 according to a fourth embodiment, wherein the stud body 221 is pyramidal on a prismatic base and wherein the fixing projection 222 and the pin hole 223 are the same as in Figs 2a-2c.

Figs 10a-10b schematically illustrate a stud 230 according to a fifth embodiment, wherein the stud body 231 is cylindrical with a rounded apex 236 and wherein the fixing projection 232 and the pin hole 233 are the same as in Figs 2a-2c. Such studs are particularly advantageous, since the round cross section of the stud 230 reduces the torque induced on the animal's joints when the hoof is turned relative to the ground.

Figs 11a-11b schematically illustrate a stud 240 according to a sixth embodiment, wherein the stud body 241 is prismatic with a square base and having a knob shaped apex 246, and wherein the fixing projection 242 and the pin hole 243 are the same as in Figs 2a-2c.

Figs 12a-12b schematically illustrate a stud 250 according to a seventh embodiment, wherein the stud body 251 is pyramidal on a prismatic base and provided with a pointed apex 256, and wherein the fixing projection 252 and the pin hole 253 are the same as in Figs 2a-2c.

The cross section of the pin hole 13, 23 of the stud 10, 200, 210, 220, 230, 240, 250 or the blind stud 20 may be slightly elongated in a direction parallel with the wear side of the shoe 1, 100, in order to facilitate insertion of the locking pin 40 in a case where the fixing protrusion and the recess are slightly displaced, and the pin holes 6a, 6b, 13, 23, 203, 213, 223, 233, 243, 253 are not perfectly aligned.

The stud 10, 200, 210, 220, 230, 240, 250 and the blind stud 20 may be provided with a bevel 205, 215, 225, 235, 245, 255 at the upper surface 14, which facilitates the insertion of the spatula portion 34 of the tool 30.

The method for studding a shoe for a hoofed animal comprises providing a shoe 1 as described above. The method may be performed in substantially the same manner regardless of whether the shoe is loose, or attached to the hoof of the animal.

The fixing protrusion 12 of the stud 10, 20 is arranged in the recess 5 of the shoe 1. In connection therewith, the pin holes 6a, 6b, 13, 23 of the shoe 1 and the stud 10, 20, respectively, are sufficiently aligned for the locking pin 40 to be insertable therein.

Then, the locking pin 40 is inserted into the aligned pin holes 6a, 6b, 13, 23.

Removing the stud 10, 20 from the shoe 1 may also be performed in substantially the same manner regardless of whether the shoe is loose, or attached to the hoof of the animal.

In the case where the shoe 1 is attached to the hoof of the animal, the removal of the stud 10, 20 involves lifting the hoof, pulling out the locking pin 40, optionally by using the gripping portion 31 of the tool 30 described herein, and optionally using the spatula portion 34 of the tool 30 to wedge the stud 10, 20 out of the recess 5. Thereafter the new stud 10, 20 may be inserted in the manner described above.

It is noted that the disclosure provided herein is applicable not only to shoes for horses, but to shoes for any hoofed animal, and hence, the appended claims are not limited to shoes for horses.

It is also noted that although the disclosure provided herein is directed to a U-shaped shoe 1, 100, other shapes of shoes are not excluded, such as e.g. annular or similarly shaped shoes.

Furthermore, the second portion 6b of the pin hole may be dispensed with, particularly, but not exclusively, in such instances where the pin hole 13, 23, 203, 213, 223, 233, 243, 253 of the fixing protrusion 12, 22, 202, 212, 222, 232, 242, 252 is not a through hole.

It is further noted that the disclosure provided herein is not limited to the illustrated positioning of the studs 10, 20, 200, 210, 220, 230, 240, 250 relative to the shoe 1, 100. Thus, the shoe 1, 100 may be provided with any number of studs 10, 20, 200, 210, 220, 230, 240, 250, positioned in any pattern. For example, it may be advantageous to provide a single, possibly broader, stud at a central part of the front portion 2, 102 of the shoe.

The pin hole 6a, 6b and/or the side recess 7 may be displaced in the thickness direction of the shoe 1, e.g. in order to provide more material below the side recess 7 than above it, and thereby reducing the risk of material failure associated with a thin material portion near the wear side. It is understood that the side recess 7 does not need to be concentric with the pin hole 6a, 6b.

In addition, it is recognized that the side recess may be open not only towards the side surface 8a, 8b, 8c of the shoe 1, 100, but also to one or both main surfaces of the shoe. For example, in one embodiment, the side recess 7, 107 may be open to the side surface 8a, 8b, 8c, 108a, 108b, 108c of the shoe 1, 100 and to the lower surface of the shoe. In another embodiment, the side recess 7, 107 may be open to the side surface 8a, 8b, 8c, 108a, 108b, 108c of the shoe 1, 100 and to the upper surface of the shoe 1, 100. In yet another embodiment, the side recess 7, 107 may be open towards the side surface 8a, 8b, 8c, 108a, 108b, 108c and towards both the upper and the lower surfaces.

The solution with shaping the recess and the fixing protrusion to counteract rotation of the stud relative to the shoe may be used in connection with the fixing systems disclosed in DE 20 2005 005 955 U1, US 4,139,061 and DE 10 2004 026 191 A1, in which case the pin holes and the locking pin may be replaced by the pointed screw, the spring clip and the o-ring, respectively. Thus, there is provided a shoe system for a hoofed animal, the system comprising a shoe having an wear side, which in use faces a surface supporting the animal, and a detachable stud, the system comprising fixing means for fixing the stud to the shoe, said fixing means comprising a recess in the wear side of the shoe and a fixing protrusion on the stud, which is sized and adapted for being received in the recess, wherein the recess and the fixing protrusion are shaped to counteract rotation of the stud relative to the shoe.

Finally, it is recognized that the solution with the pin and pin hole may be used together with a fixing protrusion/recess configuration which, but for the pin, would allow the stud to rotate relative to the shoe.

## Claims

1. A shoe system for a hoofed animal, the system comprising a shoe (1, 100) having a wear side, which in use faces a surface supporting the animal, and a detachable stud (10, 20, 200, 210, 220, 230, 240, 250),
the system comprising fixing means for fixing the stud (10, 20, 200, 210, 220, 230, 240, 250) to the shoe (1, 100),
said fixing means comprising a recess (5, 105) in the wear side of the shoe (1, 100) and a fixing protrusion (12, 22, 202, 212, 222, 232, 242, 252) on the stud (10, 20, 200, 210, 220, 230, 240, 250), which is sized and adapted for being received in the recess (5, 105),
**characterized in that**
the fixing means further comprises a pin hole (6a, 6b) in the shoe (1, 100) which is open into said recess (5, 105), and
a corresponding pin hole (13, 23, 203, 213, 223, 233, 243, 253) in the fixing protrusion (12, 22, 202, 212, 222, 232, 242, 252),
whereby the stud (10, 20, 200, 210, 220, 230, 240, 250) is lockable relative to the shoe (1, 100) by a locking pin (40) insertable into said pin holes (6a, 6b, 13, 23, 203, 213, 223, 233, 243, 253).

2. The shoe system as claimed in claim 1, wherein the recess (5, 105) and the fixing protrusion (12, 22, 202, 212, 222, 232, 242, 252) are shaped to counteract rotation of the stud (10, 20, 200, 210, 220, 230, 240, 250) relative to the shoe (1, 100).

3. The shoe system as claimed in any one of the preceding claims, wherein the shoe (1, 100) presents a front portion (2, 102) and two rearward extending branch portions (3a, 3b, 103a, 103b), whereby said fixing means is provided
at a respective rear part of the branch portions (3a, 3b, 103a, 103b), and/or
at transversely spaced apart positions of the front portion (2, 102).

4. The shoe system as claimed in any one of the preceding claims, wherein the pin hole (6a, 6b, 106a, 106b) is open towards a side (8a, 8b, 8c, 8d, 108a, 108b, 108c, 108d, 108e) of the shoe (1, 100).

5. The shoe system as claimed in claim 4, wherein the pin hole (6a, 6b, 106a, 106b) opens into a side recess (7, 107) adapted for receiving a gripping portion (41) of the locking pin (40).

6. The shoe system as claimed in any one of the preceding claims, wherein the pin hole (6a, 6b, 106a, 106b) opens into the recess (5, 105) and continues on an opposite side of the recess (5, 105).

7. A stud (10, 20, 200, 210, 220, 230, 240, 250) for use in the shoe system as claimed in any one of the preceding claims,
the stud (10, 20, 200, 210, 220, 230, 240, 250) comprising a stud body (11, 21, 201, 211, 221, 231, 241, 251) and a fixing protrusion (12, 22, 202, 212, 222, 232, 242, 252), which is sized and adapted for being received in a recess (5, 105) in the wear side of the shoe (1, 100),
**characterized in that**
the fixing protrusion (12, 22, 202, 212, 222, 232, 242, 252) comprises a pin hole (13, 23, 203, 213, 223, 233, 243, 253), adapted for receiving a locking pin (40) for locking the stud (10, 20, 200, 210, 220, 230, 240, 250) relative to the shoe (1, 100).

8. The stud (10, 20, 200, 210, 220, 230, 240, 250) as claimed in claim 7, wherein the fixing protrusion (12, 22, 202, 212, 222, 232, 242, 252) is shaped to counteract rotation of the stud (10, 20, 200, 210, 220, 230, 240, 250) relative to the shoe (1, 100).

9. The stud (10, 20, 200, 210, 220, 230, 240, 250) as claimed in claim 7 or 8, wherein the pin hole (12, 22, 202, 212, 222, 232, 242, 252) is through hole.

10. A method for studding a shoe for a hoofed animal, the method comprising:
providing a shoe (1, 100) having a wear side, which in use faces a surface supporting the animal, the shoe (1, 100) having fixing means comprising a recess (5, 105) in the wear side, which is sized and adapted for receiving the fixing protrusion (12, 22, 202, 212, 222, 232, 242, 252) of a stud (10, 20, 200, 210, 220, 230, 240, 250), said fixing means further comprising a pin hole (6a, 6b, 106a, 106b) in the shoe (1, 100) which is open into said recess (5, 105),
providing the stud (10, 20, 200, 210, 220, 230, 240, 250) as claimed in any one of claims 7-9,
arranging the fixing protrusion (12, 22, 202, 212, 222, 232, 242, 252) of the stud (10, 20, 200, 210, 220, 230, 240, 250) in the recess (5, 105) of the shoe (1, 100),
substantially aligning the pin holes (6a, 6b, 13, 23, 203, 213, 223, 233, 243, 253) of the shoe (1, 100) and the stud (10, 20, 200, 210, 220, 230, 240, 250), respectively, and
arranging a locking pin (40) in said substantially aligned pin holes (6a, 6b, 13, 23, 203, 213, 223, 233, 243, 253).
